# EUROPÄISCHE PATENTANMELDUNG

(11) **EP 2 322 790 A2**
(43) Veröffentlichungstag der Anmeldung: **18.05.2011**
(21) Anmeldenummer: 10008361.7
(22) Anmeldetag: 11.08.2010
(51) Int. Cl.: F02N 7/00, F02N 11/08, B60W 30/18, B60K 6/08, F16H 57/04, B60W 20/00, F02N 19/00

(54) **Verfahren zum Starten einer Brennkraftmaschine**

(30) Priorität: 13.11.2009 DE 102009053284
(71) Anmelder: Dr. Ing. h.c. F. Porsche AG, 70435 Stuttgart (DE)
(72) Erfinder: Baur, Peter, 71297 Moensheim (DE); Nassif, Serge, 67840 Kilstett (FR)

(57) **Zusammenfassung**

Bei einem Verfahren zum Starten einer über eine Anfahreinrichtung mit einem Getriebe verbundenen, in einem Start-Stopp-Betrieb betriebenen Brennkraftmaschine eines Kraftfahrzeugs wird der Anfahreinrichtung mittels einer Hydraulikpumpe über eine Ventileinrichtung ein Hydraulikmedium zuführt. Vor und während mittels eines Anlassers durchgeführten Startens der Brennkraftmaschine steuert ein Steuergerät die Ventileinrichtung derart an, dass dieselbe eine Förderung des Hydraulikmediums zu der Anfahreinrichtung freigibt. Das Steuergerät steuert die Hydraulikpumpe derart an, dass dieselbe während des Startens der Brennkraftmaschine das Hydraulikmedium direkt in die Anfahreinrichtung fördert, um mittels der Anfahreinrichtung eine mechanische Wirkverbindung zwischen der Brennkraftmaschine und dem Getriebe herzustellen.

## Beschreibung

Die Erfindung betrifft ein Verfahren zum Starten einer über eine Anfahreinrichtung mit einem Getriebe verbundenen, in einem Start-Stopp-Betrieb betriebenen Brennkraftmaschine eines Kraftfahrzeugs nach der im Oberbegriff von Anspruch 1 näher definierten Art.

In jüngster Zeit ist eine Tendenz von Automobilherstellern zu erkennen, die bereits in den 1980er-Jahren eingeführte Start-Stopp-Funktion der Brennkraftmaschine von Kraftfahrzeugen wieder einzuführen, d. h. die Brennkraftmaschine bei kurzen Stopps des Kraftfahrzeugs, wie beispielsweise an Ampeln oder im Stau, abzustellen und bei Bedarf, der üblicherweise durch das Betätigen des Gaspedals angekündigt wird, wieder zu starten. Teilweise kommt es jedoch beim Anfahren des Kraftfahrzeugs, das üblicherweise durch das Schließen der mechanischen Wirkverbindung zwischen der Brennkraftmaschine und einem Getriebe mittels einer Anfahreinrichtung, beispielsweise einer nassen Kupplung, durchgeführt wird, zu Verzögerungen, da die Anfahreinrichtung zunächst mit einem Hydraulikmedium, üblicherweise Öl, befüllt werden muss, bevor das mit der Brennkraftmaschine ausgestattete Kraftfahrzeug anfahren kann.

Aus dem Stand der Technik sind verschiedene Lösungsansätze bekannt, die dieses Problem beseitigen sollen. So ist in der DE 102 48 454 A1 beschrieben, dass zunächst eine hydraulische Anlage einer Anfahreinrichtung aktiviert bzw. befüllt werden soll, bevor die Brennkraftmaschine gestartet wird. Das dort beschriebene Kraftübertragungssystem erfordert jedoch einen Elektromotor bzw. Generator, der eine Hydraulikpumpe antreibt, um die hydraulische Anlage zu befüllen. Bis zur vollständigen Bereitschaft der hydraulischen Anlage wird die Brennkraftmaschine nicht gezündet bzw. es wird derselben kein Kraftstoff zugeführt. Zusätzlich ist beim Starten der Brennkraftmaschine sogar die Ausgangsleistung derselben durch eine Zündzeitverschiebung reduziert und zumindest einige der Einlass- und Auslassventile werden geschlossen gehalten. Sämtliche dieser Maßnahmen verzögern das Starten der Brennkraftmaschine jedoch nicht unerheblich und führen zu einem sehr komplizierten Ablauf. Unter anderem deshalb ist es erforderlich, das Drehmoment des Elektromotors zu steuern oder zu regeln, was einen großen Aufwand erforderlich macht.

Ein gattungsgemäßes Verfahren ist in der DE 10 2006 014 758 A1 beschrieben. Hierbei ist ein zusätzlicher Druckspeicher vorgesehen, der zur Befüllung des Hydrauliksystems beim Starten der Brennkraftmaschine dient. Ein solcher Zusatzdruckspeicher sorgt jedoch für einen erheblichen Kostenanstieg, der noch durch die zusätzlichen Federelemente, Rückschlagventile, Drosseln und dergleichen, die zum Betreiben desselben benötigt werden, erhöht wird. Ein sehr großer Nachteil dieses Verfahrens besteht außerdem darin, dass zunächst der Druckspeicher aufgeladen werden muss, bevor das Hydrauliksystem mit Hydraulikmedium versorgt werden kann.

Es ist daher Aufgabe der vorliegenden Erfindung, ein Verfahren zum Starten einer Brennkraftmaschine zu schaffen, bei dem zwischen der Einleitung des Startvorgangs durch den Fahrer und dem Start des mit der Brennkraftmaschine ausgestatteten Kraftfahrzeugs eine möglichst kurze Zeitspanne liegt.

Erfindungsgemäß wird diese Aufgabe durch die in Anspruch 1 genannten Merkmale gelöst.

Gemäß der vorliegenden Erfindung wird also die zu der Hydraulikpumpe führende Ventileinrichtung bereits vor dem Starten der Brennkraftmaschine freigegeben, wodurch die Hydraulikpumpe bereits während des Startens der Brennkraftmaschine das Hydraulikmedium in die Anfahreinrichtung fördern kann. Dadurch kann das Hydraulikmedium schon mit Beginn des Anlassens, also bei sehr niedrigen Drehzahlen des zum Starten der Brennkraftmaschine verwendeten Anlassers, zum Befüllen der Anfahreinrichtung genutzt werden. Das während des Anlassvorgangs von der Hydraulikpumpe geförderte Hydraulikmedium wird dabei direkt für die Anfahreinrichtung genutzt, ohne dass zuerst ein Druckspeicher oder dergleichen befüllt werden muss. Dies führt dazu, dass während des Startens der Brennkraftmaschine bereits die mechanische Wirkverbindung zwischen der Brennkraftmaschine und dem Getriebe hergestellt werden kann, so dass das mit der Brennkraftmaschine ausgestattete Kraftfahrzeug erheblich schneller anfahren kann, als dies bei bekannten Lösungen der Fall ist. Erfindungsgemäß erfolgt das Starten der Brennkraftmaschine und das Befüllen der Anfahreinrichtung also gleichzeitig.

Durch diesen parallelen Ablauf kann die Brennkraftmaschine ohne zeitliche Verzögerung gestartet werden, wobei der Zündvorgang der Brennkraftmaschine durch die erfindungsgemäße Vorgehensweise weder verzögert noch behindert wird. Vielmehr wird der Anlassvorgang der Brennkraftmaschine sogar geringfügig erleichtert, da das Hydraulikmedium in die Anfahreinrichtung gefördert wird, wodurch sich der Systemdruck und damit auch der Widerstand beim Anlassen reduziert.

Durch den Verzicht auf zusätzliche Hilfskomponenten, den das erfindungsgemäße Verfahren möglich macht, können sowohl Kosten als auch Bauraum eingespart werden und es ergibt sich sowohl eine einfachere Vorrichtung als auch ein einfacherer Verfahrensablauf als dies bei bekannten Lösungen der Fall ist. Unter anderem kann auch auf einen die Hydraulikpumpe unterstützenden Elektromotor bzw. einen Starter/Generator verzichtet werden, da das Starten der Brennkraftmaschine bei dem erfindungsgemäßen Verfahren von dem bereits vorhandenen Anlasser übernommen wird. Vorteilhafterweise ist dabei kein Regeln oder Steuern des Anlassers erforderlich.

Ein sehr schnelles Ansteuern der Ventileinrichtung kann sich in einer vorteilhaften Ausgestaltung der Erfindung ergeben, wenn das Steuergerät die Ventileinrichtung mittels einer CAN-Ankündigung vor dem Start der Brennkraftmaschine bestromt.

Zu bevorzugen ist, dass als Hydraulikmedium Öl verwendet wird und dass als Anfahreinrichtung eine nasse Kupplung verwendet wird.

Weitere vorteilhafte Ausgestaltungen und Weiterbildungen der Erfindung ergeben sich aus den restlichen Unteransprüchen. Nachfolgend ist ein Ausführungsbeispiel der Erfindung anhand der Zeichnung prinzipmäßig dargestellt.

Dabei zeigen:
- Fig.1: eine schematische Darstellung der zur Durchführung des erfindungsgemäßen Verfahrens eingesetzten Komponenten und deren Verschaltung; und
- Fig. 2: ein Diagramm, das die Auswirkungen des erfindungsgemäßen Verfahrens bei einem Startvorgang einer Brennkraftmaschine im Vergleich mit einem Verfahren gemäß dem Stand der Technik zeigt.

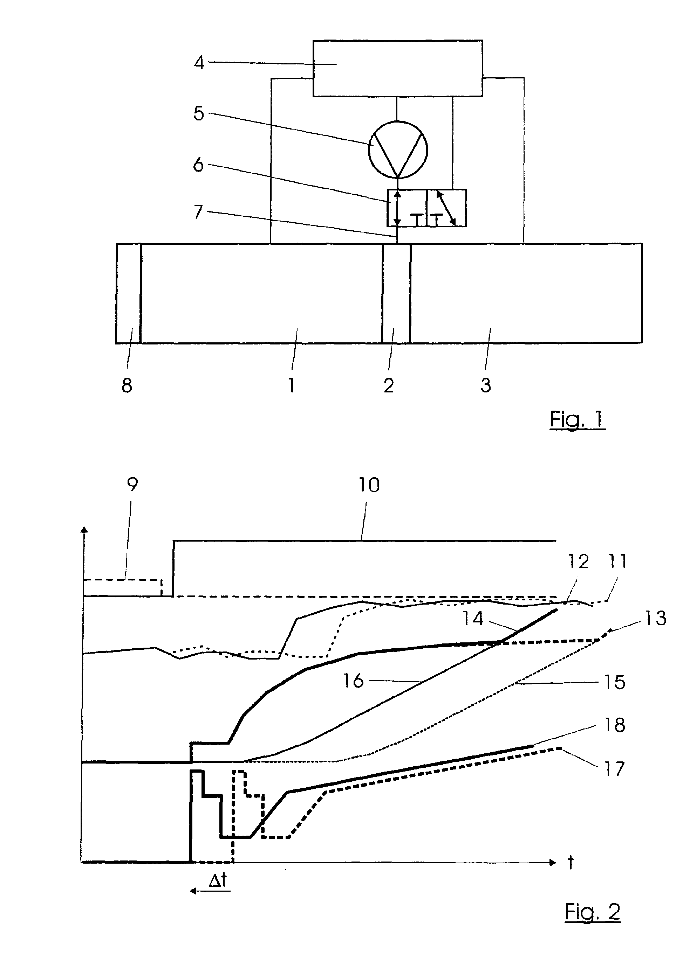

Fig. 1 zeigt in einer sehr schematischen Darstellung eine Brennkraftmaschine 1, welche über eine im vorliegenden Fall als nasse Kupplung ausgebildete Anfahreinrichtung 2 mit einem Getriebe 3, in dem beschriebenen Ausführungsbeispiel vorzugsweise einem Automatikgetriebe, verbunden ist. Da die in Fig. 1 dargestellten Komponenten von an sich bekannter Bauart sein können, wird auf Details derselben nicht näher eingegangen.

Sowohl die Brennkraftmaschine 1 als auch das Getriebe 3 sind mit einem Steuergerät 4 verbunden, welches außerdem mit einer Hydraulikpumpe 5 und mit einer Ventileinrichtung 6 verbunden ist. Die Ventileinrichtung 6 ist im vorliegenden Fall als 3/2-Wegeventil dargestellt, eine solche Ausgestaltung der Ventileinrichtung 6 ist jedoch als rein beispielhaft anzusehen und es könnten verschiedene andere Ventileinrichtungen 6 eingesetzt werden, um einen von der Hydraulikpumpe 5 erzeugten Volumenstrom eines Hydraulikmediums, vorzugsweise Öl, über eine Leitung 7 durch die Ventileinrichtung 6 zu der Anfahreinrichtung 2 zu leiten.

Die Brennkraftmaschine 1 wird in einem Start-Stopp-Betrieb betrieben, d. h. beim Stillstand eines nicht dargestellten, mit der Brennkraftmaschine 1 ausgestatteten Kraftfahrzeugs und gegebenenfalls beim Vorliegen weiterer Voraussetzungen, die jedoch allgemein bekannt sein können, wird die Brennkraftmaschine 1 abgestellt. Sobald die Brennkraftmaschine 1 eine Ankündigung bzw. einen Hinweis erhält, dass sie wieder gestartet und das Kraftfahrzeug in Betrieb gesetzt werden soll, wird ein nachfolgend beschriebenes Verfahren zum Starten der Brennkraftmaschine 1 durchgeführt. Der Hinweis zum Starten der Brennkraftmaschine 1 kann beispielsweise von einem nicht dargestellten Fahr- bzw. Gaspedal ausgehen, welches ebenfalls mit dem Steuergerät 4 verbunden sein kann. Die Brennkraftmaschine 1 wird in an sich bekannter Weise mittels eines Anlassers 8 gestartet, wobei vor dem Starten der Brennkraftmaschine 1 das Steuergerät 4 die Ventileinrichtung 6 derart ansteuert, dass dieselbe eine Förderung des Hydraulikmediums zu der Anfahreinrichtung 2 freigibt, d. h. das Steuergerät 4 bringt die Ventileinrichtung 6 in die in Fig. 1 dargestellte Position, in der die Hydraulikpumpe 5 über die Ventileinrichtung 6 mit der Anfahreinrichtung 2 verbunden ist. Des weiteren steuert das Steuergerät 4 die Hydraulikpumpe 5 derart an, dass dieselbe während des Startens der Brennkraftmaschine 1, vorzugsweise bereits zu Beginn des Startens derselben, das Hydraulikmedium direkt, d. h. ohne eine dazwischen angeordnete Einrichtung, in die Anfahreinrichtung 2 fördert. Das Freigeben der Ventileinrichtung 6 mittels des Steuergeräts 4 kann über eine CAN-Ankündigung vor dem Start der Brennkraftmaschine 1 erfolgen.

Wie der Darstellung von Fig. 1 zu entnehmen ist, ist die Hydraulikpumpe 5 mit keinerlei Hilfsmitteln versehen, d. h. sie bringt den zum Befüllen der Anfahreinrichtung 2 erforderlichen Volumenstrom des Hydraulikmediums ohne Hilfsmittel auf. Hierzu kann die Hydraulikpumpe 5 auf nicht dargestellte, jedoch an sich bekannte Weise von der Brennkraftmaschine 1 angetrieben werden, beispielsweise indem sie in einen von der Kurbelwelle der Brennkraftmaschine 1 angetriebenen Ventiltrieb integriert ist. Dadurch treibt bereits die erste Umdrehung der Brennkraftmaschine 1 nach dem Starten derselben die Hydraulikpumpe 5 an und fördert das Hydraulikmedium in die Anfahreinrichtung 2. Ein hierbei von der Hydraulikpumpe 5 ausgehender Volumenstrom bzw. ein von der Hydraulikpumpe 5 erzeugter Druck kann so geregelt werden, dass er sich asymptotisch von unten einem vorher eingestellten Zieldruck nähert. Ein Überschreiten dieses Zieldrucks, der sich beispielsweise durch Überfüllen der Anfahreinrichtung 2 ergeben könnte und der möglicherweise zu einem Anfahrruck führt, ist aufgrund der sich durch die niedrigen Drehzahlen des Anlassers 8, die sich in einem Bereich von bis zu 300 1/min bewegen können, ergebenden geringen Pumpenförderleistung ausgeschlossen. Dadurch werden auch Steuer- bzw. Regelungsungenauigkeiten, die durch eine zu lange Befülldauer mit einem zu hohen Vorbefülldruck entstehen können, vermieden und der Anfahrruck beim Anfahren des Kraftfahrzeugs wird reduziert. Das bei den genannten Drehzahlen geförderte Ölvolumen ist in der Regel ausreichend, um die Anfahreinrichtung 2 befüllen zu können, während sich der Anlasser 8 dreht. Nach der Zündung der Brennkraftmaschine 1 erhöht sich die Drehzahl derselben bis zur Leerlaufdrehzahl. Wenn die Befüllung der Anfahreinrichtung 2 mit dem Hydraulikmedium bis zur Zündung der Brennkraftmaschine 1 noch nicht vollständig abgeschlossen ist, so erfolgt die restliche Befüllung aufgrund der höheren Drehzahl der Brennkraftmaschine 1, die dann auch über die Leerlaufdrehzahl ansteigen kann. Bei der Befüllung der Anfahreinrichtung 2 mit dem Hydraulikmedium kann dieselbe ein Moment aufbauen, um die mechanische Wirkverbindung zwischen der Brennkraftmaschine 1 und dem Getriebe 2 herzustellen und für ein Anfahren des Kraftfahrzeugs zu sorgen.

In Fig. 2 sind die Vorteile des oben beschriebenen Verfahrens gegenüber bekannten Verfahren anhand eines Diagramms dargestellt. Die Linien 9 - 18 stellen verschiedene Betriebszustände von Komponenten des Kraftfahrzeugs oder der Brennkraftmaschine 1 über der Zeit t dar. Hierbei stellt die mit dem Bezugszeichen 9 bezeichnete gestrichelte Linie die Stellung der Bremse, die mit dem Bezugszeichen 10 bezeichnete Linie die Stellung des Fahrpedals des Kraftfahrzeugs dar. Mit der gestrichelten Linie 11 ist die Beschleunigung des Kraftfahrzeugs gemäß einem aus dem Stand der Technik bekannten Verfahren dargestellt, mit der mit dem Bezugszeichen 12 bezeichneten Linie die Beschleunigung des Kraftfahrzeugs mit dem erfindungsgemäßen Verfahren. Die mit dem Bezugszeichen 13 bezeichnete gestrichelte Linie stellt den Verlauf der Drehzahl der Brennkraftmaschine 1 gemäß einem aus dem Stand der Technik bekannten Verfahren dar, die mit dem Bezugszeichen 14 bezeichnete Linie die Drehzahl der Brennkraftmaschine 1 mit dem erfindungsgemäßen Verfahren. Die mit dem Bezugszeichen 15 bezeichnete gestrichelte Linie stellt die Eingangsdrehzahl des Getriebes 3 bei einem aus dem Stand der Technik bekannten Verfahren dar, die mit dem Bezugszeichen 16 bezeichnete Linie die Eingangsdrehzahl des Getriebes 3 gemäß des erfindungsgemäßen Verfahrens. Schließlich stellt die mit dem Bezugszeichen 17 versehene gestrichelte Linie den Solldruck der Anfahreinrichtung 2 gemäß einem aus dem Stand der Technik bekannten Verfahren dar, während die mit dem Bezugszeichen 18 bezeichnete Linie den Solldruck der Anfahreinrichtung 2 mit dem erfindungsgemäßen Verfahren darstellt.

Es ist aus dem Diagramm eindeutig zu erkennen, dass sowohl der an der Anfahreinrichtung 2 anstehende Druck als auch die Erhöhung der Eingangsdrehzahl des Getriebes 3 und letztendlich auch die Beschleunigung des Kraftfahrzeugs um eine Zeit □t erheblich nach vorne verschoben werden, d. h. dass die Beschleunigung des Kraftfahrzeugs, die Eingangsdrehzahl des Getriebes 3 und der Druck an der Anfahreinrichtung 2 zu einem früheren Zeitpunkt erhöht sind. Mit anderen Worten, die Reaktionszeit beim Starten der Brennkraftmaschine 1 wird durch das erfindungsgemäße Verfahren erheblich verringert.

## Patentansprüche

1. Verfahren zum Starten einer über eine Anfahreinrichtung mit einem Getriebe verbundenen, in einem Start-Stopp-Betrieb betriebenen Brennkraftmaschine eines Kraftfahrzeugs, wobei der Anfahreinrichtung mittels einer Hydraulikpumpe über eine Ventileinrichtung ein Hydraulikmedium zuführt wird, **dadurch gekennzeichnet, dass** vor dem mittels eines Anlassers (8) durchgeführten Starten der Brennkraftmaschine (1) ein Steuergerät (4) die Ventileinrichtung (6) derart ansteuert, dass dieselbe eine Förderung des Hydraulikmediums zu der Anfahreinrichtung (2) freigibt, und dass das Steuergerät (4) die Hydraulikpumpe (5) derart ansteuert, dass dieselbe während des Startens der Brennkraftmaschine (1) das Hydraulikmedium direkt in die Anfahreinrichtung (2) fördert, um mittels der Anfahreinrichtung (2) eine mechanische Wirkverbindung zwischen der Brennkraftmaschine (1) und dem Getriebe (3) herzustellen.

2. Verfahren nach Anspruch 1, **dadurch gekennzeichnet, dass** das Steuergerät (4) die Ventileinrichtung (6) mittels einer CAN-Ankündigung vor und während des Starts der Brennkraftmaschine (1) bestromt.

3. Verfahren nach Anspruch 1 oder 2, **dadurch gekennzeichnet, dass** als Hydraulikmedium Öl verwendet wird.

4. Verfahren nach Anspruch 1, 2 oder 3, **dadurch gekennzeichnet, dass** als Anfahreinrichtung (2) eine nasse Kupplung verwendet wird.

5. Verfahren nach einem der Ansprüche 1 bis 4, **dadurch gekennzeichnet, dass** das Hydraulikmedium mit dem Beginn des Startens der Brennkraftmaschine (1) zum Befüllen der Anfahreinrichtung (2) verwendet wird.

6. Verfahren nach einem der Ansprüche 1 bis 5, **dadurch gekennzeichnet, dass** die Hydraulikpumpe (5) den zum Befüllen der Anfahreinrichtung (2) erforderlichen Volumenstrom des Hydraulikmediums ohne Hilfsmittel aufbringt.

7. Verfahren nach einem der Ansprüche 1 bis 6, **dadurch gekennzeichnet, dass** die Hydraulikpumpe (5) von der Brennkraftmaschine (1) angetrieben wird, wobei bereits die erste Umdrehung der Brennkraftmaschine (1) nach dem Starten derselben die Hydraulikpumpe (5) antreibt und das Hydraulikmedium in die Anfahreinrichtung (2) fördert.

8. Verfahren nach einem der Ansprüche 1 bis 7, **dadurch gekennzeichnet, dass** ein von der Hydraulikpumpe (5) erzeugter Druck des Hydraulikmediums so geregelt wird, dass er sich asymptotisch von unten einem Zieldruck nähert.
